# EUROPÄISCHE PATENTSCHRIFT

(11) **EP 1 028 792 B1**
(45) Veröffentlichungstag und Bekanntmachung des Hinweises auf die Patenterteilung: **18.12.2002**
(21) Anmeldenummer: 98962246.9
(22) Anmeldetag: 05.11.1998
(51) Int. Cl.: B01D 8/00, B01D 7/02, F25J 3/08

(54) **AUSFRIEREN EINER GASKOMPONENTE AUS EINEM GASGEMISCH**
FREEZING A GAS COMPONENT IN A GAS MIXTURE
SEPARATION PAR CONGELATION D'UN CONSTITUANT GAZEUX CONTENU DANS UN MELANGE GAZEUX

(30) Priorität: 11.11.1997 DE 19749836
(43) Veröffentlichungstag der Anmeldung: 23.08.2000
(73) Patentinhaber: Forschungszentrum Jülich GmbH, 52425 Jülich (DE)
(72) Erfinder: HACKFORT, Helmut, D-50933 Köln (DE)
(86) Internationale Anmeldenummer: DE9803298
(87) Internationale Veröffentlichungsnummer: WO99024136

(56) Entgegenhaltungen:
- EP-A- 0 167 040
- FR-A- 2 272 951
- FR-A- 2 653 029

## Beschreibung

Die Erfindung betrifft ein Verfahren zum Abtrennen einer Gaskomponente aus einem Gasgemisch durch Ausfrieren. Die Erfindung betrifft ferner eine Vorrichtung zur Durchführung des Verfahrens.

Aus den Druckschriften DE 35 18 283 C2 und DE 196 35 002 A1 sind Verfahren bekannt, bei denen kontinuierlich abzutrennende Gase aus Kühlfallen abgesaugt werden. Hierdurch sollen hohe Reinheitsgrade erzielt werden.

Ein Verfahren der eingangs genannten Art ist ferner aus der Druckschrift DE 34 22 417 A1 bekannt. Zum Abtrennen einer Gaskomponente aus einem Gasgemisch durch Ausfrieren wird eine Kühlfalle mit einer Ausfrierstrecke vorgesehen. In der Kühlfalle wird das Gas durch lange Verweilzeiten und sehr große Kühlflächen zu einem intensiven Wärme- und Materialaustausch mit den Kühl- oder Kondensationsflächen gezwungen. Die Kühlflächen werden durch allgemein quer zur Gasströmungsrichtung verlaufende Bleche gebildet.

Starke Übersättigungen des Gases innerhalb der Kühlfalle werden so sicher vermieden. Die Kühlfalle weist keine zum Verstopfen neigenden Verengungen auf. Die Temperatur wird über die Ausfrierstrecke hinweg überwacht und so geregelt, daß am Gaseingang derselben die Sättigungstemperatur der auszufrierenden Komponente und am Ausgang die ihrer gewünschten Restkonzentration entsprechende Sättigungstemperatur herrscht. Dazwischen wird für ein im wesentlichen lineares Temperaturprofil gesorgt. Dafür sind Temperaturfühler an den Kühlblechen und eine stufenweise Regelung der Strecke durch Kühlmittelstrom und Zusatzheizung mit zwischengeschalteten Wärmedämmstufen vorgesehen.

Das bekannte Verfahren erfordert einen relativ hohen apparativen Aufwand.

Aufgabe der Erfindung ist die Bereitstellung eines einfachen Verfahrens der eingangs genannten Art, bei der die abzutrennenden Komponente vollständig und mit hoher Reinheit erhalten wird. Aufgabe der Erfindung ist ferner die Schaffung einer Vorrichtung, mit der das Verfahren quasi kontinuierlich durchgeführt werden kann.

Die Aufgabe wird durch ein Verfahren mit den Merkmalen des Haupt- sowie durch eine Vorrichtung mit den Merkmalen des Nebenanspruchs gelöst. Vorteilhafte Ausgestaltungen ergeben sich aus den rückbezogenen Ansprüchen.

Anspruchsgemäß wird aus einem Gasgemisch die Gaskomponente abgetrennt, die den kleinsten Dampfdruck aufweist. Die Dampfdrücke der übrigen (anderen) Komponenten im Gasgemisch sollten deutlich größer sein im Vergleich zum vorgenannten kleinsten Dampfdruck. Das Verfahren kann dann besonders gut und wirtschaftlich betrieben werden.

Eine Arbeitstemperatur sollte so gewählt werden, daß der Dampfdruck der abzutrennenden Gaskomponente nahe Null ist. Die Abtrennung der Gaskomponente mit dem kleinsten Dampfdruck kann dann besonders wirtschaftlich betrieben werden. Ein hoher technischer Aufwand ist nicht erforderlich.

Ein Beispiel für ein anspruchsgemäßes Gasgemisch stellt ein Gemisch aus Xenon und Sauerstoff mit 70 Vol.-% Xenon und 30 Vol.-% Sauerstoff dar. Bei einer Arbeitstemperatur von 78 K beträgt der Dampfdruck der Gaskomponente Xenon ca. 10⁻³ mbar und ist nahe Null im vorgenannten Sinne. Der Dampfdruck der Gaskomponente Sauerstoff beträgt 228 mbar bei 78 K und ist somit wesentlich größer als der von Xenon im vorgenannten Sinn.

Verfahrensgemäß wird das Gasgemisch der Arbeitstemperatur ausgesetzt. Dabei wird der bei der Arbeitstemperatur herrschende Partialdruck (bzw. die Partialdrücke, wenn drei und mehr Gaskomponenten im Gasgemisch vorliegen) der Gaskomponente, die nicht ausfrieren soll, kleiner als der (bei der Arbeitstemperatur herrschende) Dampfdruck dieser Gaskomponente gehalten. Hierdurch wird vermieden, daß diese Gaskomponente kondensiert oder ausfriert.

Im Fall des Xenon-Sauerstoff-Gasgemisches ist also der Sauerstoffpartialdruck der Sauerstoffkomponente kleiner als 228 mbar zu halten, wenn das Gasgemisch verfahrensgemäß einer Arbeitstemperatur von 78 K ausgesetzt wird. Eine Arbeitstemperatur von 78 K kann preiswert durch Kühlen mit flüssigem Stickstoff erreicht werden. Der Sauerstoffpartialdruck sollte insbesondere weniger als 200 mbar während des Ausfrierens betragen, um zuverlässig zum gewünschten Ergebnis zu gelangen.

Die abzutrennende Gaskomponente friert dabei aus. Die andere Gaskomponente bzw. anderen Gaskomponenten bleiben gasförmig. Sind die Gittereigenschaften der Gase (im gefrorenen Zustand) hinreichend unterschiedlich, so werden Moleküle oder Atome der anderen Gaskomponenten regelmäßig nicht in das Gitter des entstehenden Festkörpers eingebaut. Einige Gasmoleküle oder Atome werden höchstens durch Adsorption auf der Oberfläche des entstehenden Festkörpers gebunden.

Ein hinreichender Unterschied zwischen den jeweiligen Gittern besteht zum Beispiel zwischen gefrorenem Xenon und gefrorenem Argon oder aber zwischen gefrorenem Xenon und gefrorenem Sauerstoff.

Nachdem die Gaskomponente mit dem kleinsten Dampfdruck bei der herrschenden Arbeitstemperatur ausgefroren ist, werden die anderen Gaskomponenten zum Beispiel durch Abpumpen vom ausgefrorenen Gas getrennt. Mit zunehmender Pumpdauer werden die adsorptiv gebundenen Verunreinigungen durch Desorption verringert und folglich der Reinheitsgrad gesteigert. Nach einem anschließenden Aufwärmen des gefrorenen Gases entsteht durch Sublimation dann ein Gas mit entsprechend hohem Reinheitsgrad.

Im Fall eines Xenon(90 Vol.-%)-Argon(10 Vol.-%)-Gasgemisches mußte nach dem Ausfrieren nur wenige Minuten mit einer Vorvakuumpumpe (zweistufige Drehschieberpumpe) gepumpt werden, um zu einem Reinheitsgrad des Xenons von 99,9% zu gelangen.

Das Verfahren wurde ferner besonders erfolgreich bei einem Xenon-Stickstoff- sowie einem Xenon-Krypton-Stickstoff-Gasgemisch zur Abtrennung von Xenon angewendet.

Das Verfahren kann mit sehr einfachen Mitteln und somit preiswert durchgeführt werden.

Eine Vorrichtung zur Durchführung des Verfahrens umfaßt wenigstens zwei Kühlbehälter (Kühlfalle, Ausfrierstrecke), die auf Arbeitstemperatur gekühlt werden können. Jeder Kühlbehälter weist einen verschließbaren Ein- und Auslaß auf. Eine Pumpe ist mit jedem Auslaß verbunden. Die Vorrichtung umfaßt ferner Mittel, um das Gasgemisch wechselweise dem einen und dem anderen Kühlbehälter so zuführen zu können, daß sich im jeweiligen Behälter der gewünschte Partialdruck einstellt. Durch das wechselweise Zuführen des Gasgemisches kann ein kontinuierlicher Betrieb gewährleistet werden. Befindet sich in einem der Behälter ein Gasgemisch oder wird das Gasgemisch durch diesen Behälter geleitet (Durchflußbetrieb), so wird die abzutrennende Komponente im Behälter ausgefroren und danach der Behälter leergepumpt. So verbleibt nur noch das ausgefrorene Gas (Feststoff) im Behälter. Der Feststoff kann anschließend aus dem entsprechenden Behälter geeignet entfernt werden. Dies kann zum Beispiel durch Erwärmen geschehen. Der dabei entstehende Überdruck kann unmittelbar genutzt werden, um eine mit dem Behälter verbundene Gasflasche mit Druck zu befüllen.

Eine 100 %-ige Rückgewinnung von zum Beispiel Xenon aus einem Gasgemisch ist so problemlos möglich.

Das anspruchsgemäße Verfahren kann grundsätzlich auf jedes Gasgemisch bei Vorliegen der genannten Bedingungen angewendet werden.

Die Vorrichtung weist in einer vorteilhaften Ausführungsform Mittel auf, die das Gasgemisch im Behälter den kühlenden Flächen (Kühlflächen) zuleiten. So wird sichergestellt, daß das Gasgemisch in jedem Fall an die kühlenden Flächen, an denen das Gas ausfriert, gelangt. Das Ausfrieren kann dann zuverlässig und wirtschaftlich im Durchflußbetrieb des Gasgemisches durch den Behälter hindurch erfolgen.

In einer weiteren vorteilhaften Ausgestaltung weist die Vorrichtung oberflächenvergrößernde Kühlbleche im Kühlbehälter auf. Die Kühlleistung kann so gesteigert werden.

## Patentansprüche

1. Verfahren zum Abtrennen einer Gaskomponente aus einem Gasgemisch durch Ausfrieren mit den Merkmalen:
a)die abzutrennende Gaskomponente weist im Vergleich zu den übrigen Gaskomponenten im Gasgemisch den kleinsten Dampfdruck auf,
b)es wird eine einzige Arbeitstemperatur gewählt, bei der die abzutrennende Gaskomponente ausfriert,
c)das Gasgemisch wird der Arbeitstemperatur ausgesetzt,
d)die bei der Arbeitstemperatur herrschenden Partialdrücke der übrigen Gaskomponenten werden kleiner als ihre Dampfdrücke bei Arbeitstemperatur gehalten,
e)nach dem Ausfrieren der abzutrennenden Komponente wird der verbleibende Feststoff von den übrigen Gasen getrennt.

2. Verfahren nach vorhergehendem Anspruch, bei dem die übrigen Gase durch Abpumpen vom verbleibenden Feststoff getrennt werden.

3. Verfahren nach einem der vorhergehenden Ansprüche, bei dem das gefrorene, von den übrigen Gasen getrennte Gas anschließend erwärmt wird.

4. Vorrichtung zur Durchführung des Verfahrens nach Anspruch 1 mit den Merkmalen:
a)wenigstens zwei Kühlbehälter, die auf Arbeitstemperatur durch Kühlmittel gekühlt werden können, sind vorgesehen,
b) jeder der beiden Kühlbehälter weist einen verschließbaren Ein- und Auslaß auf,
c)eine Pumpe ist mit jedem der beiden Auslasse verbunden,
d)Mittel sind vorgesehen, die ein Gasgemisch wechselweise dem einen und dem anderen Kühlbehälter so zuführen zu können, daß sich im jeweiligen Behälter ein vorgegebener Partialdruck einstellt.

5. Vorrichtung nach vorhergehendem Anspruch, mit oberflächenvergrößernden Kühlblechen im Behälter.

## Claims

1. Method for separating a gas component from a gas mixture by freezing-out, having the features that:
a) the gas component to be separated has the smallest vapour pressure compared with the other gas components in the gas mixture,
b) a single working temperature is selected, at which the gas component to be separated freezes out,
c) the gas mixture is subjected to the working temperature,
d) the partial pressures of the other gas components prevailing at the working temperature are kept smaller than their vapour pressures at the working temperature,
e) following the freezing-out of the component to be separated, the remaining solid is separated from the other gases.

2. Method according to the previous claim, in which the other gases are separated from the remaining solid by pumping out.

3. Method according to one of the previous claims, in which the frozen gas separated from the other gases is subsequently warmed up.

4. Device for executing the method according to Claim 1, having the features that:
a) at least two cooling containers, which may be cooled to working temperature by coolant, are provided,
b) each of the two cooling containers has a closable inlet/outlet,
c) a pump is connected to each of the two outlets,
d) means are provided which are capable of feeding a gas mixture alternately to one or the other cooling container, such that a predetermined partial pressure is produced in the respective container.

5. Device according to a previous claim, having surface area-increasing cooling plates in the container.

## Revendications

1. Procédé pour séparer un composant gazeux d'un mélange gazeux par congélation avec les caractéristiques :
a) le composant gazeux à séparer présente par comparaison aux autres composants gazeux dans le mélange gazeux, la plus faible pression de vapeur ;
b) on choisit une seule température de travail, à laquelle le composant gazeux à séparer congèle ;
c) le mélange gazeux est placé à la température de travail ;
d) les pressions partielles régnant à la température de travail, des autres composants gazeux sont maintenues inférieures à leur pression de vapeur à la température de travail, et
e) après la congélation du composant à séparer, le solide restant est séparé du gaz résiduel.

2. Procédé selon la revendication précédente, dans lequel les gaz résiduels sont séparés du solide restant par pompage.

3. Procédé selon l'une quelconque des revendications précédentes, dans lequel le gaz séparé des gaz résiduels, congelé, est ensuite réchauffé.

4. Dispositif pour réaliser le procédé selon la revendication 1, avec les caractéristiques :
a) au moins deux récipients réfrigérants sont prévus, lesquels peuvent être refroidis à la température de travail par un agent de réfrigération ;
b) chacun des deux récipients réfrigérants présente une entrée et une sortie pouvant être fermées ;
c) une pompe est reliée à chacune des deux sorties, et
d) des moyens sont prévus, qui peuvent conduire un mélange gazeux alternativement vers l'un et l'autre des récipients réfrigérants de sorte que l'on ajuste dans chaque récipient, une pression partielle donnée.

5. Dispositif selon la revendication précédente, avec des tôles froides augmentant la surface dans les récipients.
